Europäisches Patentamt

European Patent Office

Office européen des brevets

(19)

(11) Veröffentlichungsnummer: **0 174 445**

**A2**

(12) ## EUROPÄISCHE PATENTANMELDUNG

(21) Anmeldenummer: 85107412.0

(22) Anmeldetag: 15.06.85

(51) Int. Cl.⁴: **H 02 J 7/10**

(30) Priorität: 11.08.84 DE 3429673

(43) Veröffentlichungstag der Anmeldung:
19.03.86 Patentblatt 86/12

(84) Benannte Vertragsstaaten:
AT CH DE FR IT LI

(71) Anmelder: ROBERT BOSCH GMBH
Postfach 50
D-7000 Stuttgart 1(DE)

(72) Erfinder: Hollenberg, Horst
Robert-Leicht-Strasse 128
D-7000 Stuttgart 80(DE)

(72) Erfinder: Joos, Gerhard
Bergheimerweg 13/1
D-7016 Gerlingen(DE)

(72) Erfinder: Meyer-Staufenbiel, Torsten
Brucknerweg 4
D-7257 Ditzingen 5(DE)

(54) Verfahren und Vorrichtung zum Schnelladen einer Batterie.

(57) Es wird ein Verfahren und eine Vorrichtung vorgeschlagen zum Schnelladen einer Batterie (16), insbesondere einer Bleibatterie für Kraftfahrzeuge, bei dem die an den Klemmen der Batterie anliegende Spannung überwacht und der Ladevorgang beim Überschreiten vorgegebener Grenzwerte (U1, U2, U3) der Batteriespannung und/oder der Ladezeit (t) unterbrochen wird. Die Ladung erfolgt zunächst (o-t1) mit hohem Ladestrom (Schnelladestrom) bis zum Erreichen eines ersten Grenzwertes (U1) der Batteriespannung oder bis zum Ende einer ersten vorgegebenen Ladezeit (t1), wobei am Ende dieser ersten Ladezeit (t1) der Ladevorgang abgebrochen wird, wenn der erste Spannungs-Grenzwert (U1) nicht erreicht wurde. Andererseits wird der Ladevorgang mit verringertem Ladestrom (Normalladestrom) fortgesetzt, wenn der erste Spannungs-Grenzwert (U1) innerhalb der ersten Ladezeit (o-t1) erreicht worden ist. Das Ende des Ladevorgangs ist definiert entweder durch das Erreichen eines zweiten, höheren Spannungs-Grenzwertes (U2) oder durch den Ablauf einer zweiten, fest vorgegebenen Ladezeit (t2), wenn der höhere Spannungs-Grenzwert (U2) nicht erreicht worden ist.

FIG. 2

0174445

R. 19554
31.7.1984 Rs/Hm

ROBERT BOSCH GMBH, 7000 STUTTGART 1

Verfahren und Vorrichtung zum Schnelladen
einer Batterie

Stand der Technik

Die Erfindung geht aus von einem Verfahren und einer
zugehörigen Vorrichtung entsprechend der Gattung des
Hauptanspruches. Ein derartiges Ladegerät für Batterien ist bekannt aus der DE-B 21 14 100. Die Batterieladung erfolgt bei diesem Verfahren derart, daß der
Ladestrom bei Erreichen der Gasungsspannung der Batterie
unterbrochen und bei einem entsprechend geringeren Schwellwert wieder eingeschaltet wird, solange, bis die Ladeeinrichtung von der Batterie getrennt wird. Zur Vermeidung
unerwünschter Abschaltungen zu Beginn des Ladevorganges
ist es aus dieser Veröffentlichung weiterhin bekannt, die
Abschaltschwelle bei Ladebeginn anzuheben.

. . .

Weiterhin ist auf dem Markt eine Vorrichtung zum Schnellladen von Batterien verbreitet, bei welcher der Ladevorgang
mittels eines sogenannten Pöhlerschalters gesteuert wird.
Der Ladevorgang erfolgt so, daß bei Erreichen eines vorgegebenen Grenzwertes der Batteriespannung, bzw. der mit
der Zellenzahl multiplizierten Gasungsspannung einer Batteriezelle eine Umschaltung auf einen reduzierten Ladestrom erfolgt, welcher für eine fest vorgegebene Zeitspanne aufrechterhalten wird. Bei Nichterreichen des
Spannungsgrenzwertes erfolgt eine Unterbrechung des Ladevorganges nach einer fest vorgegebenen Maximalladedauer.

Vorteile der Erfindung

Das erfindungsgemäße Verfahren mit den kennzeichnenden Merkmalen des Hauptanspruches hat demgegenüber den Vorteil,
daß mit einer verhältnismäßig einfachen und preiswerten
Vorrichtung eine Schnelladung von Batterien ermöglicht
wird, bei der man einen günstigen Kompromiß zwischen
möglichst großer Volladung und möglichst geringer Überladung der Batterie erreicht. Dies wird insbesondere
dadurch ermöglicht, daß das Nachladen der Batterie mit
einem verringerten Ladestrom, dem sogenannten Normalladestrom, gesteuert erfolgt, wobei die Klemmenspannung
der Batterie überwacht und bei Erreichen eines vorgegebenen, erhöhten Grenzwertes der Ladevorgang dann
unterbrochen wird, wenn ein möglichst hoher Ladegrad
der Batterie erreicht ist ohne nennenswerte Überladung derselben.

Durch die in den Unteransprüchen aufgeführten Maßnahmen
sind vorteilhafte Weiterbildungen und Verbesserungen
des im Hauptanspruch angegebenen Verfahrens sowie eine
zweckmäßige Gestaltung der zugehörigen Vorrichtung mög-

...

lich. So hat es sich als günstig erwiesen, wenn auch
bei dem erfindungsgemäßen Verfahren in an sich bekannter
Weise der Grenzwert der zulässigen Batteriespannung
während einer ersten, mit dem Ladevorgang beginnenden
Zeitspanne (0 - t0) angehoben wird zur Vermeidung von
unerwünschten Abschaltungen durch Spannungserhöhung infolge einer Sulfatierung der Batterie. Das Verfahren
wird besonders vereinfacht durch die Verwendung eines
von einem der Schwellwertschalter in Betrieb gesetzten
Zählers zur Umsteuerung der Batteriespannung auf die
verschiedenen Grenzwerte, welche so zu fest vorgegebenen
Zeitpunkten erfolgt. Der Zähler erhält seine Impulse
zweckmäßigerweise von einem Impulsformer, welcher vom
Wechselstromnetz versorgt wird. Die Beendigung des
Schnelladevorganges erfolgt bei Nichterreichen des ersten
Grenzwertes (U1) der Batteriespannung vorzugsweise zum
gleichen Zeitpunkt (t1) wie das Umschalten des Grenzwertes der Batteriespannung auf den zweiten, höheren
Grenzwert (U2). Diese Zeitspanne ist verhältnismäßig
kurz, so daß der Ladevorgang frühzeitig unterbrochen
wird, wenn die Batterie defekt ist. Diese Verkürzung
des Schnelladevorgangs erlaubt eine Verlängerung der
Nachladung mit verringertem Strom (Normalladung), dessen
Beendigung bei Nichterreichen des zweiten Grenzwertes
(U2) der Batteriespannung ebenfalls zu einem festen
Zeitpunkt (t2) erfolgt.

Hinsichtlich der Gestaltung der Vorrichtung hat es sich
als besonders zweckmäßig erwiesen, wenn eine der Batteriespannung proportionale Spannung auf jeweils einen
Eingang von drei Schwellwertschaltern (I, II, III) gelegt wird, deren andere Eingänge mit einer Referenzspannung (UR) beaufschlagt sind und deren Ausgänge bei
polrichtung angeklemmter Batterie den Ladevorgang

...

einerseits über einen Zähler (Z) starten und andererseits
über eine Logik (L) in Abhängigkeit von der Höhe der
Batteriespannung steuern. Hierzu ist ein erster Schwellwertschalter vorgesehen, welcher über einen Zähler den
Ladevorgang startet, während ein zweiter Schwellwertschalter den Schnelladevorgang und ein dritter Schwellwertschalter den Normalladevorgang steuert. Die Umsteuerung
zur Absenkung des Spannungsgrenzwertes kurz nach Beginn
des Ladevorgangs erfolgt über den zweiten Schwellwertschalter, dessen Schaltschwelle durch ein Signal des
Zählers umsteuerbar ist zur Absenkung des Spannungs-
grenzwertes (U3, U2). Über den zweiten Schwellwertschalter erfolgt zweckmäßigerweise auch die Umsteuerung
vom Schnelladevorgang auf den Normalladevorgang beim
Erreichen des ersten Grenzwertes (U1) der Batteriespannung, wobei vorzugsweise eine Schaltvorrichtung
im Primärkreis des Transformators betätigt wird zur
Erhöhung der Primärwindungszahl des Transformators
und somit zur Verringerung des Batterie-Ladestroms.
Die Beendigung des Ladevorganges erfolgt über einen
dritten Grenzwertschalter, welcher nach dem Anstieg der
Batteriespannung bis zum zweiten Grenzwert (U2) über
die Logik (L) eine Schaltvorrichtung zwischen dem Gleichrichter und der Batterie betätigt.

Zeichnung

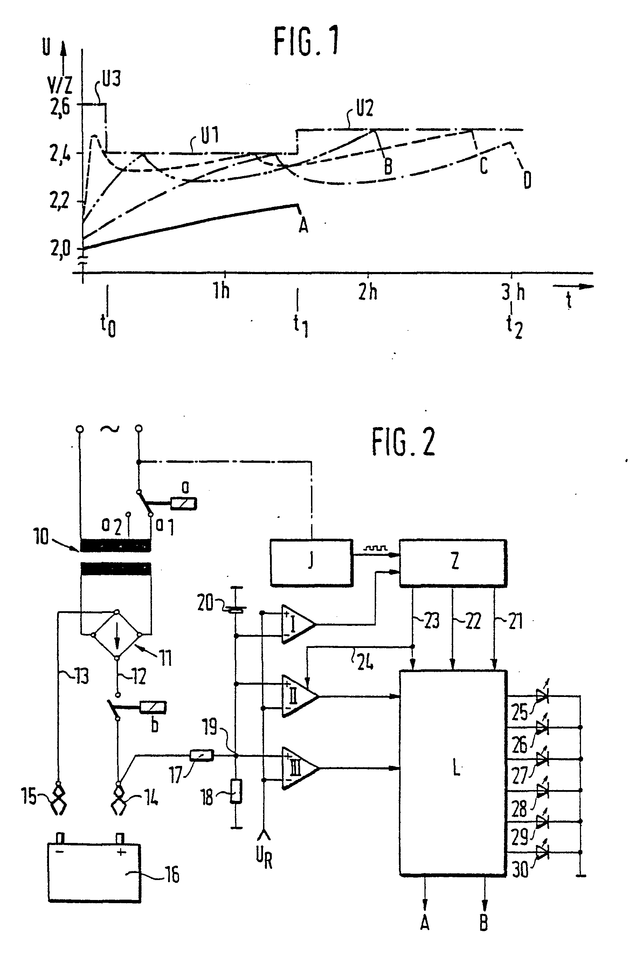

Ein Ausführungsbeispiel der Erfindung ist in der Zeichnung schematisch dargestellt und in der nachfolgenden
Beschreibung näher erläutert. Es zeigen Figur 1 ein
Funktionsdiagramm, welches für verschiedene Ladevorgänge den Verlauf der Batteriespannung in Abhängigkeit
von der Zeit darstellt und Figur 2 ein Prinzipschaltbild
einer Vorrichtung zur Durchführung des vorgeschlagenen
Ladevorgangs.

19554

0174445

Beschreibung des Ausführungsbeispiels

Figur 1 zeigt den Verlauf der Spannung an einer Batteriezelle, stellvertretend für den Verlauf der Batteriespannung an den äußeren Anschlußklemmen der Batterie, in
Abhängigkeit von der Zeit. Hierbei sind zunächst drei
verschiedene Grenzwerte der Batteriespannung festgelegt,
nämlich die Gasungsspannung U1 einer Batteriezelle mit
2,4 Volt als erster Grenzwert im Bereich zwischen to und
t1, ein erhöhter Grenzwert U2 mit 2,5 Volt pro Zelle,
welcher das Ende des Normalladevorganges definiert und
ein dritter Grenzwert U3 mit 2,6 Volt pro Zelle zu Beginn des Ladevorgangs. Der Grenzwert U2 gilt im Bereich
zwischen t1 und t2, der dritte Grenzwert U3 im Bereich
zwischen Ladebeginn und to. Beim Ausführungsbeispiel
entspricht to einer Dauer von 10 Minuten, t1 einer
Dauer von 1,5 Stunden und t2 einer Dauer von 3 Stunden.

Die Kurve A zeigt den Verlauf der Zellenspannung an einer
defekten Batterie, wobei die Gasungsspannung U1 bis
zum Zeitpunkt t1 nicht erreicht und in diesem Zeitpunkt
der Ladevorgang unterbrochen wird.

Die Kurve B zeigt den Verlauf der Spannung an einer Zelle
einer guten, etwa zur Hälfte geladenen Batterie. Die Zellenspannung steigt dabei innerhalb von ca. 25 Minuten auf
den ersten Grenzwert U1 an, welcher der Gasungsspannung
entspricht. Beim Erreichen dieses Grenzwertes wird der
Ladestrom reduziert, wodurch die Zellenspannung zunächst
absinkt und dann wieder ansteigt bis zum Erreichen des
zweiten Grenzwertes U2 der Zellenspannung von 2,5 Volt
nach etwa zwei Stunden. Beim Erreichen dieses zweiten
Grenzwertes U2 wird der Ladevorgang beendet.

...

Die Kurve C zeigt den Verlauf der Zellenspannung einer
sulfatierten, leeren Batterie. Hier wirkt sich der dritte
Grenzwert U3 aus, weil die Zellenspannung zu Beginn der
Ladung innerhalb der ersten 10 Minuten die Gasungsspannung,
bzw. den ersten Grenzwert U1 übersteigt. Durch das Anheben
des Grenzwertes auf U3 unterbleibt die Abschaltung der
Vorrichtung zu Beginn des Ladevorgangs, bis die Zellenspannung nach ca. einer Stunde und zehn Minuten den
ersten Grenzwert U1 erreicht. In diesem Zeitpunkt erfolgt wiederum die Umschaltung von Schnelladung auf
Normalladung, welche nach ca. zwei Stunden und 45 Minuten
beendet wird durch Erreichen des zweiten Grenzwertes U2.

Schließlich zeigt die Kurve D den Verlauf der Ladespannung an einer Zelle einer guten, jedoch leeren
Batterie. Die Zellenspannung steigt zunächst allmählich
an bis zum Erreichen des ersten Grenzwertes U1 nach ca.
1 Stunde und 20 Minuten, es erfolgt dann eine Umschaltung
von Schnelladung auf Normalladung bei verringertem Strom
und wiederum zunächst absinkender Klemmenspannung, bis
nach ca. 3 Stunden der Ladevorgang durch Zeitablauf
beendet wird.

In Figur 2 ist eine Schaltvorrichtung zur Durchführung
des erfindungsgemäßen Verfahrens dargestellt. Hierin ist
ein Transformator 10 mit seiner Primärwicklung an die
Netzwechselspannung angeschlossen, seine Sekundärwicklung
liegt am Eingang eines Gleichrichters 11. In der Zuleitung zur Primärwicklung ist ein Umschalter a vorgesehen,
dessen Schaltkontakt in der Ruhelage die Verbindung zum
Endpunkt a1 der Primärwicklung herstellt, während in der
Arbeitslage eine Anzapfung a2 der Primärwicklung kontaktiert wird. Die Anzapfung a2 entspricht der Schaltstellung Schnelladung, der Endpunkt a1 der Normalladung.

Der Ausgang des Gleichrichters 11 ist über Leitungen 12 und
13 sowie über Klemmen 14 und 15 mit dem positiven und dem
negativen Pol einer Batterie 16 verbunden. In der Zuleitung
12 zum positiven Pol der Batterie 16 ist ein Arbeitskontakt einer Schaltvorrichtung b vorgesehen, welcher am
Ende des Ladevorgangs die Zuleitung zur Batterie 16 unterbricht. Selbstverständlich kann der Umschalter a und die
Schaltvorrichtung b auch in anderer Weise realisiert sein,
beispielsweise durch Halbleiterschaltvorrichtungen.

Die Klemme 14 und der positive Pol der Batterie 16 sind
an einen Spannungsteiler aus zwei Widerständen 17 und 18
angeschlossen, von einem Verbindungspunkt 19 zwischen den
Widerständen 17 und 18 führen Leitungen zu einem Glättungskondensator 20 sowie zum invertierenden Eingang eines ersten Schwellwertschalters I und zu den nichtinvertierenden
Eingängen von Schwellwertschaltern II und III. Der nichtinvertierende Eingang des Schwellwertschalters I sowie
die intvertierenden Eingänge der Schwellwertschaltung II
und III sind gemeinsam an eine Referenzspannung gelegt,
welche beispielsweise über einen Hilfstransformator und
eine Zenerdiode gewonnen werden kann. Bei einer 12 Volt-
Batterie liegt die Referenzspannung Ur in der Größenordnung von etwa 5 bis 6 Volt. Die Umschaltung auf andere
Batteriespannungen erfolgt durch Veränderung des Spannungsteilers aus den Widerständen 17 und 18.

An das eingangsseitige Wechselspannungsnetz ist weiterhin ein Impulsformer I angeschlossen, dessen Impulse
abgegeben werden an einen Zähler Z. Dieser wird in Gang
gesetzt durch ein LOW-Signal am Ausgang des Schwellwertschalters I. Letzterer dient gleichzeitig als Verpolschutz für den Anschluß der Batterie 16, da das LOW-Signal
an seinem Ausgang nur erscheint, wenn an seinem invertierenden Eingang eine Spannung von mindestens 0,15 Volt pro
Zelle anliegt, d.h. bei einer 12 Volt-Batterie eine Spannung von mindestens 0,9 Volt.

Vom Zähler Z führen Signalleitungen 21, 22 und 23 zu einer
verknüpfenden Logik L und eine weitere Signalleitung parallel
zur Signalleitung 23 zum Schwellwertschalter II. Am Ausgang der Logik L sind die Steuerleitungen A und B für den
Umschalter a und die Schaltvorrichtung b angedeutet.
Weitere Eingänge der Logik L sind mit den Ausgängen der
Schwellwertschalter II und III verbunden, während an weiteren Ausgängen der Logik L Signalvorrichtungen in Form
von Leuchtdioden 25 bis 30 angeschlossen sind. Die Kathoden
der Leuchtdioden 25 bis 30 sind gemeinsam auf Masse
gelegt. Sie signalieren folgende Betriebszustände:
Leuchtdiode 25 kennzeichnet die Betriebsbereitschaft
der Ladevorrichtung, d.h. das Vorhandensein der Netzspannung und den polrichtigen Anschluß der Batterie 16;
die Leuchtdiode 26 zeigt die Schnelladung, die Leuchtdiode 27 die Normalladung an, die Leuchtdiode 28 signalisiert das Ende des Ladevorgangs nach dem Öffnen der
Schaltvorrichtung b; schließlich signalisiert die Leuchtdiode 29 eine Störung der Ladung, beispielsweise wenn
gemäß Kurve A der erste Grenzwert der Batteriespannung,
bzw. der Zellenspannung nicht erreicht wird und die
Leuchtdiode 30 signalisiert eine Störung im Ladegerät,
z.B. eine Übertemperatur am Transformator oder am
Gleichrichter.

Die Ladevorrichtung wirkt folgendermaßen:
Nach dem Anlegen der Netzwechselspannung an die Primärwicklung des Transformators 10 erhält der Impulsformer I
seine Versorgungsspannung und gibt eine Impulsfolge ab
an den Zähler Z. Durch den Anschluß der Klemmen 14 und 15

. . .

an die Pole der Batterie 16 gelangt über den Verbindungspunkt 19 positives Potential auf den invertierenden Eingang des Schwellwertschalters I, so daß an dessen Ausgang
nach Überschreitung der Verpolschutzspannung $\geqq$ 0,15 Volt
pro Zelle das HIGH-Signal verschwindet, welches den Zähler Z
blockiert. Mit dem Erscheinen des LOW-Signals am Ausgang
des Schwellwertschalters I beginnt dieser zu arbeiten und
schaltet über die Signalleitung 21, die Logik L und über
deren Ausgang B die Schaltvorrichtung b sowie über die
Steuerleitung A den Umschalter a, so daß unverzüglich über
die Anzapfung a2 auf der Primärseite des Transformators 10
und den geschlossenen Kontakt der Schaltvorrichtung b der
Schnelladevorgang der Batterie 16 einsetzt.

Der Schwellwert U3 für das Umschalten des Schwellwertschalters II liegt zunächst bei einer Schwellenspannung von 2,6 Volt pro Zelle der Batterie, so daß im
Fall C gemäß Figur 1 der Schnelladevorgang ohne Abschaltung wegen Spannungsüberschreitung verläuft. Nach
Ablauf einer Zeit von 10 Minuten im Ausführungsbeispiel
entsprechend dem Zeitpunkt to in Figur 1 gibt der Zähler Z
über die Signalleitungen 23 und 24 ein Signal an den
Schwellwertschalter II und reduziert dessen Schaltschwelle
auf die Gasungsspannung der Batterie von 2,4 Volt pro
Zelle, welche dem ersten Grenzwert U1 der Batteriespannung entspricht. Der Ladevorgang verläuft nun entsprechend den verschiedenen Kurven A bis C in Figur 1 bis
spätestens zum Zeitpunkt t1. In diesem Zeitpunkt wird
über die Signalleitung 22 die Logik L zur Beendigung
des Ladevorgangs veranlaßt durch Abgabe eines Signals
über die Steuerleitung B, wodurch die Schaltvorrichtung
b den Ladestrom unterbricht.

. . .

Im Fall der Kurven B, C und D in Figur 1 läuft der Schnellladevorgang solange, bis am nichtinvertierenden Eingang des
Schwellwertschalters II der erste Grenzwert U1 der Batteriespannung erreicht ist. Beim Anlegen des über den Spannungsteiler 17 und 18 reduzierten Potentials am nichtinvertierenden Eingang des Schwellwertschalters II springt
dessen Ausgang auf HIGH und bewirkt über die Logik L und
die Steuerleitung A die Betätigung des Umschalters a auf
den Kontakt a1, so daß nun der Ladevorgang mit verringertem Strom (Normalladestrom) fortgesetzt wird. Dieser Zustand bleibt solange erhalten, bis entweder gemäß Kennlinie D in Figur 1 die Zeit t2 erreicht ist und über die
Signalleitung 22 und die Steuerleitung B die Schaltvorrichtung b betätigt und der Ladevorgang unterbrochen wird.
Alternativ erfolgt die Beendigung des Ladevorganges beim
Erreichen des zweiten Grenzwertes U2 der Batteriespannung, bzw. der Zellenspannung gemäß den Kurven B und
C. Dies geschieht dadurch, daß am nichtinvertierenden
Eingang des Schwellwertschalters III ein Potential entsprechend dem zweiten Grenzwert U2 erscheint und über
dessen Ausgang ein HIGH-Signal die Logik L über die
Steuerleitung B veranlaßt, die Schaltvorrichtung b zu
betätigen und hierdurch den Ladevorgang zu beenden.
Der am Verbindungspunkt 19 angeschlossene Kondensator
20 dient zur Glättung der Steuerspannung.

R. **19554**     0174445

31.7.1984 Rs/Hm

ROBERT BOSCH GMBH, 7000 STUTTGART 1

Ansprüche

1. Verfahren zum Schnelladen einer Batterie, insbesondere zum Schnelladen einer Bleibatterie für Kraftfahrzeuge, bei dem die an den Klemmen der Batterie anliegende Spannung überwacht und der Ladevorgang beim Überschreiten vorgegebener Grenzwerte der Batteriespannung und/oder der Ladezeit unterbrochen wird, dadurch gekennzeichnet, daß die Ladung zunächst (0-t1) mit hohem Ladestrom (a2) (Schnelladestrom) bis zum Erreichen eines ersten Grenzwertes (U1) der Batteriespannung oder bis zum Ende einer ersten vorgegebenen Ladezeit (0-t1) erfolgt, wobei am Ende dieser ersten Ladezeit (t1) der Ladevorgang abgebrochen wird, wenn der erste Spannungs-Grenzwert (U1) nicht erreicht wurde, während der Ladevorgang nach Erreichen des ersten Spannungs-Grenzwertes (U1) innerhalb der ersten Ladezeit (o-t1) mit verringertem Ladestrom (a1) (Normalladestrom) fortgesetzt wird bis zum Erreichen eines zweiten, höheren Spannungs-Grenzwertes (U2) oder bis zum Ende einer zweiten vorgegebenen Ladezeit (t2).

2. Verfahren nach Anspruch 1, dadurch gekennzeichnet, daß der Grenzwert (U3) der zulässigen Batteriespannung während einer ersten, mit dem Ladevorgang beginnenden Zeitspanne (o-to) angehoben wird zur Vermeidung von unerwünschten Abschaltungen durch Spannungserhöhung infolge einer Sulfatierung der Batterie.

...

3. Verfahren nach Anspruch 1, dadurch gekennzeichnet, daß die Umsteuerung des Ladevorganges auf die verschiedenen Spannungs-Grenzwerte (U1, U2, U3) durch einen Zähler (Z) zu fest vorgegebenen Zeitpunkten (o-to-t1) erfolgt.

4. Verfahren nach Anspruch 1, dadurch gekennzeichnet, daß die Beendigung des Ladevorgangs mit hohen Strom (Schnelladestrom) bei Nichterreichen des ersten Grenzwertes (U1) der Batteriespannung zum gleichen Zeitpunkt (t1) wie das Umschalten des Grenzwertes der Batteriespannung auf den zweiten, höheren Grenzwert (U2) erfolgt.

5. Verfahren nach Anspruch 1, dadurch gekennzeichnet, daß die Beendigung des Ladevorgangs mit verringertem Strom (Normalladestrom) bei Nichterreichen des zweiten Grenzwertes (U2) der Batteriespannung zu einem festen Zeitpunkt (t2) erfolgt.

6. Vorrichtung zur Durchführung des Verfahrens nach einem der Ansprüche 1 bis 5, mit einem Transformator zur Herabsetzung der Netzspannung auf die Ladespannung, mit einem Gleichrichter und mit einer Schaltvorrichtung in wenigstens einer Zuleitung vom Gleichrichter zur Batterie, dadurch gekennzeichnet, daß eine der Batteriespannung proportionale Spannung auf jeweils einen Eingang von drei Schwellwertschaltern (I, II, III) gelegt ist, deren andere Eingänge mit einer Referenzspannung (UR) beaufschlagt sind und deren Ausgänge bei polrichtig angeklemmter Batterie (16) den Ladevorgang einerseits über einen Zähler (Z) starten und andererseits über eine Logik (L) in Abhängigkeit von der Höhe der Batteriespannung steuern.

...

7. Vorrichtung nach Anspruch 6, dadurch gekennzeichnet,
daß ein erster Schwellwertschalter (I) über einen Zähler
(Z) den Ladevorgang startet, daß ein zweiter Schwellwertschalter (II) den Ladevorgang mit hohem Strom (Schnellladestrom) und ein dritter Schwellwertschalter (III)
den Ladevorgang mit verringertem Strom (Normalladestrom)
steuert.

8. Vorrichtung nach Anspruch 7, dadurch gekennzeichnet,
daß der zweite Schwellwertschalter (II) einerseits durch
ein Ausgangssignal des Zählers (Z) umsteuerbar ist zur
Absenkung des Spannungs-Grenzwertes (U3, U2) nach Ablauf
der ersten, mit dem Ladevorgang beginnenden Zeitspanne
(o-to) und andererseits über die Logik (L) beim Erreichen
des ersten Grenzwertes (U1) der Batteriespannung eine
Schaltvorrichtung (a) im Primärkreis des Transformators
(10) betätigt zur Verringerung des Ladestromes auf den
Normalladestrom.

9. Vorrichtung nach Anspruch 7, dadurch gekennzeichnet,
daß der dritte Grenzwertschalter (III) nach dem Anstieg
der Batteriespannung bis zum zweiten Grenzwert (U2)
über die Logik (L) den Ladevorgang beendet mittels
der Abschaltvorrichtung (b) in der Zuleitung vom Gleichrichter (11) zur Batterie (16).

10. Vorrichtung nach Anspruch 6, dadurch gekennzeichnet,
daß der Logik (L) Anzeigeelemente (25-30) zugeordnet sind
zur Anzeige der verschiedenen Betriebszustände und von
Störungen.

11. Vorrichtung nach Anspruch 6, dadurch gekennzeichnet,
daß der Zähler (Z) seine Zählimpulse von einem netzgespeisten Impulsformer (I) erhält.

FIG. 1

FIG. 2